# EUROPÄISCHE PATENTSCHRIFT

(11) **EP 3 435 757 B1**
(45) Veröffentlichungstag und Bekanntmachung des Hinweises auf die Patenterteilung: **02.12.2020**
(21) Anmeldenummer: 17825535.2
(22) Anmeldetag: 21.12.2017
(51) Int. Cl.: A01K 1/02

(54) **AUFBLASBARE TRANSPORTBOX**
INFLATABLE TRANSPORT BOX
CAISSE DE TRANSPORT GONFLABLE

(30) Priorität: 30.12.2016 DE 102016015642
(43) Veröffentlichungstag der Anmeldung: 06.02.2019
(73) Patentinhaber: Prade, Ernstfried, 86981 Kinsau (DE)
(72) Erfinder: PRADE, Ernstfried, 86981 Kinsau (DE); WEINBERGER, Daniel, 86974 Apfeldorf (DE)
(74) Vertreter: Winter, Brandl, Fürniss, Hübner, Röss, Kaiser, Polte - Partnerschaft mbB
(86) Internationale Anmeldenummer: PCT/EP2017/084254
(87) Internationale Veröffentlichungsnummer: WO 2018/122127

(56) Entgegenhaltungen:
- WO-A1-2016/145239
- DE-A1-102004 056 026
- US-A1- 2013 000 036

## Beschreibung

### Technisches Gebiet

Die Erfindung betrifft eine aufblasbare Transportbox, insbesondere für den Transport von Hunden im Auto.

### Hintergrund und Stand der Technik

Transportboxen sind üblicherweise aus Holz, Metall und/oder Kunststoff gefertigt, wie z.B. WO 2016/145239A1. Transportboxen werden beispielsweise zum Transport von Hunden in Autos verwendet. Im unteren Bereich sind oft Holzplatten angeordnet, den oberen Sichtbereich des Hundes verschließen Gitterstäbe. Der große Nachteil solcher Transportboxen ist ihr Gewicht und ihre Unhandlichkeit. Sie sind meist so schwer, dass sie nur von zwei Personen getragen werden können. Ein weiterer großer Nachteil ist ihre Aufbewahrung. Durch ihre Größe können sie kaum in einer üblichen Garage untergebracht werden bzw. benötigen viel Platz.

Aufgabe der Erfindung ist es, eine einfache, leichte und klein zusammenlegbare Transportbox sowie praktische Anwendungen der Transportbox anzugeben.

Die Aufgabe wird durch die Transportbox nach Anspruch 1 gelöst. Vorteilhafte Weiterbildungen sind in den Unteransprüchen angegeben.

Die vorliegende Erfindung schlägt eine Transportbox aus aufblasbarem Dropstitch-Material vor. Die beiden Seitenwände, die Rückwand und der Boden der Transportbox sind aus einem Stück Dropstitch-Panel gefertigt. Das Dropstitch-Material besteht aus einer Außenwand und einer Innenwand, zwischen denen Fäden gespannt sind, die nach dem Aufblasen beide auf Distanz halten und so zu einer parallelen Außen- und Innenwand führen. Durch Faltung der inneren Dropstitch-Wand kommen beidseitig des Falzes angeordnete Teilflächen der Innenwand aufeinander zu liegen, die miteinander verklebt bzw. verschweißt sind. Dadurch wird die Innenwand verkürzt. Die Klebeflächen zwingen das sonst ebene Dropstitch-Panel, das am Rand von einer druckdichten Randbahn vollumfänglich umschlossen wird, in eine eckige, winklige Form. Zum Aufblasen ist ein Ventil vorhanden. Vorteilhafterweise wird bei dieser Art der Box-Konstruktion aus einem Dropstitch-Panel anstelle von mehreren Ventilen für Rückwand, Seitenwände und Boden nur ein Ventil zum Aufblasen benötigt. Die erfindungsgemäße Verklebung der Außen- und Innenwände eines Dropstitch-Panels führt zu einer großen Zeiteinsparung bei der Herstellung, weil Klebenähte und Ventile wegfallen.

Vorzugsweise wird die Transportbox von einer elektrisch betriebenen Pumpe aufgeblasen.

Das einfache Öffnen und Schließen der Transportbox wird durch eine aufrollbare Vorderseite und Decke erreicht. Die aufrollbare Decke ist mit Reißverschlüssen an den Seitenwänden befestigt.

Beim Ausströmen der Luft aus der aufblasbaren Transportbox werden die Seitenwände durch ein eingebautes Knickverhalten an Knicklinien veranlasst einzuknicken, so dass beim Heruntersinken der einzelnen Transportbox-Flächen ein geordnetes Zusammenfalten der Transportbox erreicht wird. Die Transportbox kann deshalb im zusammengefalteten Zustand flachliegend am Boden beispielsweise eines Kofferraumes eines Autos verbleiben. Nach dem Entweichen der Luft ist sie nur noch wenige Zentimeter hoch.

Eine solche Transportbox ist vielseitig einsetzbar. Beispielsweise kann sie als Transportbox für Tiere, insbesondere Hunde verwendet werden. Sie kann auch als Aufbau eines Fahrradanhängers für Kinder verwendet werden, wobei sie dann vorteilhafterweise innen einen Sitz oder eine Sitzbank für die Kinder umfasst. Auch die Sitzbank kann aus Dropstitch-Material bestehen.

Auch kann die Transportbox auf einer Palette angebracht werden, wobei die Palette vorzugsweise einen steifen Boden, beispielsweise in Form einer Wanne umfasst, auf der die Transportbox angeordnet ist. Die Transportbox bildet dann die Seitenwände der so erzeugten Transportpalette, wobei die Wanne bzw. der steife Boden der Palette den Boden der Box bildet bzw. ein Bestandteil deren Bodens ist.

Übliche Paletten haben einen steifen Boden, auf dem das Transportgut transportiert wird. Übliche Paletten haben oft auch Rollen an der Unterseite und Seitenwände, die das Herabfallen des Transportguts verhindern, sowie am Boden Gabelaufnahmen für einen Hubwagen oder Gabelstapler.

Die erfindungsgemäße Palette hat einen steifen Boden, der als Wanne ausgebildet sein kann. Die Seitenwände der Palette werden durch eine Transportbox mit Dropstitch-Wänden gebildet. Der Boden der Palette bzw. die Wanne kann als Boden der Transportbox ausgebildet sein. Die Transportbox kann aber einen eigenen Boden haben, der auf dem steifen Boden der Palette angebracht ist. Vorteilhaft ist, die Transportbox auf der Palette lösbar zu befestigen, so dass die Transportbox eine Wechselbox darstellt.

Die Transportbox kann aber natürlich auch für sich verwendet werden.

Bei einem Fahrradanhänger für Kinder kann der Boden des Anhängers aus einer starren Wanne bestehen, wobei Seitenwände und Rückwand aus einem zweimal gefalteten Dropstitch-Panel bestehen, das vorteilfafterweise Seitenfenster in den Seitenwänden und Rückfenster in der Rückwand umfassen kann. Die Oberseite und Vorderseite ist durch eine aufrollbare Plane öffenbarverschlossen.

In der aufblasbaren Transportbox können in den Seitenwänden, der Rückwand und der Vorderwand Sichtfenster eingearbeitet sein. Diese Ausschnitte in dem Dropstitch-Panel sind vorteilhafterweise mit Spritzgussteilen verstärkt, die so Fenster bilden. In den Fenstern sind horizontale Stäbe angeordnet, die als Gitterstäbe und gleichzeitig als Tragegriff für die Transportbox dienen. Die Innenseite der Transportbox kann mit einem abwaschbaren Material kaschiert sein, so dass die Flächen einfach mit Wasser zu reinigen sind. Vorteile der erfindungsgemäßen aufblasbaren Transportbox sind ein geringes Gewicht, eine leichte Handhabung und die Möglichkeit, sie zu einem kleinen handlichen Paket zusammenzufalten.
Vorteilhaft ist auch, die Seiten doppelwandig auszuführen. Die aufgeblasenen Seiten und die Vorderwand dienen bei der Verwendung als Hundebox auch als Aufprallschutz ähnlich einem Airbag für den Hund bei Unfällen mit dem Auto. Außerdem haben die doppelwandigen Wände und der Boden ein ausgezeichnetes Isolationsverhalten.

Weitere Einzelheiten sind in der Beschreibung eines Ausführungsbeispiels angegeben, wobei auf beiliegende Zeichnungen Bezug genommen wird.

Es zeigen:
- Fig. 1: zeigt das flachliegende Dropstitch-Panel (1)
- Fig. 2: zeigt das gefaltete Dropstitch-Panel der Transportbox in der Draufsicht
- Fig. 3: zeigt die gefaltete Transportbox in der Ansicht

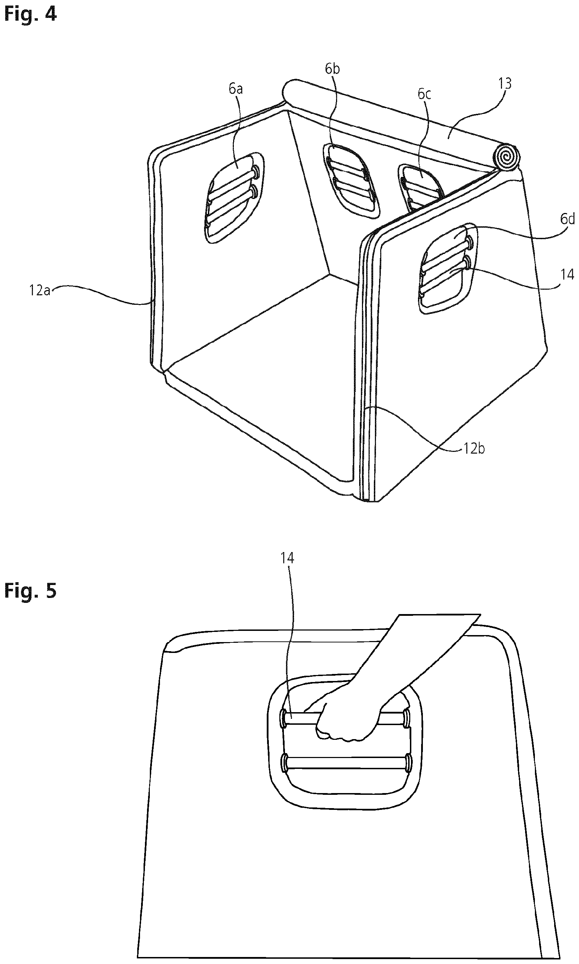

- Fig. 4: zeigt eine perspektivische Ansicht der Transportbox
- Fig. 5: zeigt das Tragen der Transportbox

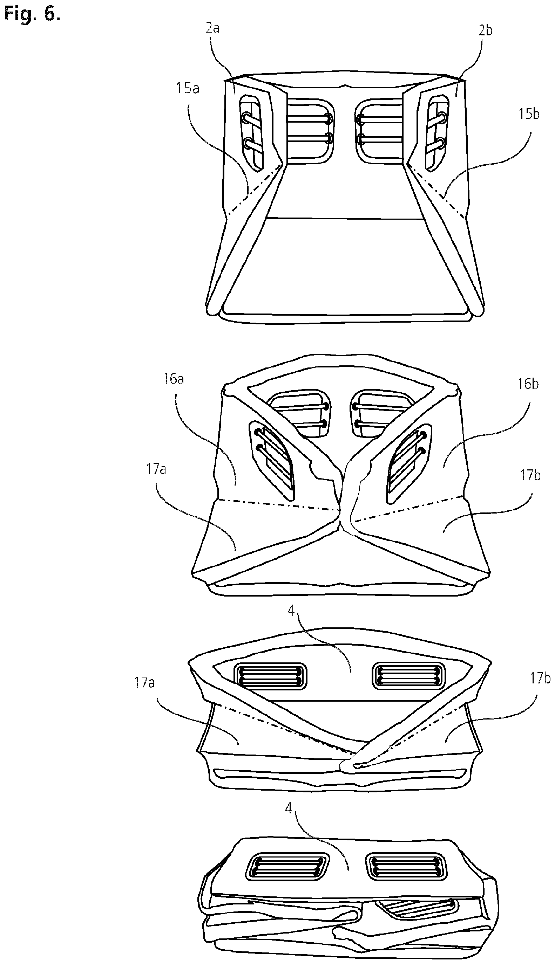

- Fig. 6: zeigt das Zusammenfalten nach dem Gebrauch

Figur 1
zeigt ein flach liegendes Dropstitch-Panel (1) mit seiner linken Seitenwand (2a) und seiner rechten Seitenwand (2b), seiner linken Falz-Markierung (3a) und seiner rechten Falz-Markierung (3b), seiner Rückwand (4), seinem Boden (5) und den Fenstern (6a), (6b), (6c), (6d).

Figur 2

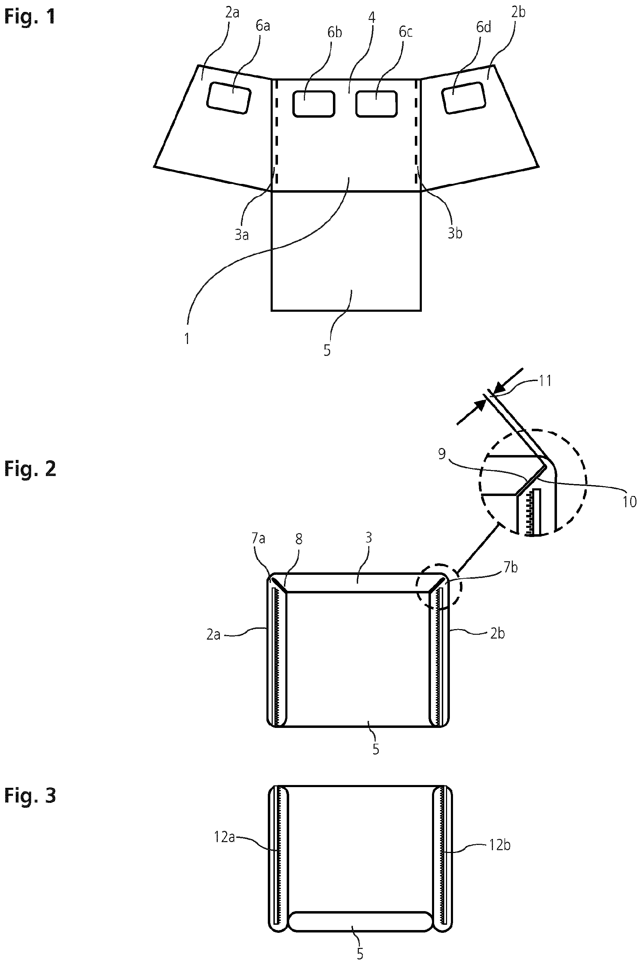

In Figur 2 ist eine Draufsicht der Transportbox zu sehen mit der Rückwand (3) sowie den beiden Seitenwänden (2a) und (2b) und dem flach liegenden Boden (5). An den Ecken (7a) und (7b) wird die Innenfläche des Dropstitch-Panels (1) an der Falz-Markierung (3a) und (3b) nach innen gebogen (8), dabei entstehen die Klebeflächen (9) und (10) es verbleibt ein Spalt (11) zwischen den Klebeflächen (9) und (10) sowie der Außenwand des Dropstitch-Panels, so dass sich ein Luftkanal zwischen Seitenwänden, Rückwand und Boden ergibt, über den drei Seiten und der Boden der Transportbox von einem Ventil aus aufgeblasen werden können.

Figur 3
zeigt die Ansicht der Transportbox mit den beidseitigen Reißverschlüssen (12a) und (12b).

Figur 4
zeigt eine perspektivische Ansicht der Transportbox mit seinen Fenstern (6a), (6b), (6c) und (6d) mit den darin befestigten Querstäben (14), die als Gitter fungieren. An den beiden Reißverschlüssen (12a) und (12b) ist die aufrollbare Front- und Oberseite(13) der Transportbox befestigt.

Figur 5
zeigt das Tragen der Gitterbox wobei die Querstäbe (14) als Tragegriffe dienen.

Figur 6
zeigt das Zusammenfalten der Transportbox nachdem das Ventil geöffnet wurde. Dabei schiebt sich die linke Seitenwand (2a) unter die rechte Seitenwand (2b). An vorgegebenen Knicklinien (15a) und (15b) knicken die beiden Seitenwände ein, so dass die oberen Flächen (16a) und (16b) der Seitenwand auf den untern Flächen (17a) und (17b) der Seitenwand, zu liegen kommen. Gleichzeitig klappt die Rückwand (4) als ganze Fläche nach vorne und kommt so auf den zusammengefalteten Seitenwänden zum Liegen.

### Bezugszeichenliste

- 1: Dropstitch-Panel 2a linke Seitenwand
- 2b: rechte Seitenwand 3a und
- 3b: Falzmarkierungen
- 4: Rückwand
- 5: Boden
- 6a, 6b, 6c, 6d: Fenster 7a und
- 7b: Ecken
- 8: nach innen gebogene Fläche 9 und 10 Klebefläche
- 11: Spalt
- 12a und 12b: Reißverschluss
- 13: aufrollbare Front- und Oberseite
- 14: Querstäbe 15a und
- 15b Knicklinien 16a und 16b: obere
- Fläche 17a und 17b: untere Fläche

## Patentansprüche

1. Aufblasbare Transportbox, die einen Boden (5), eine Rückwand (4), eine rechte Seitenwand (2a) und eine linke Seitenwand (2b) aufweist, wobei Boden (5), Rückwand (4) und die Seitenwände (2a, 2b) aus Dropstitch-Material bestehen, wobei die Rückwand (4) an einer Falzkante mit dem Boden (5) verbunden ist und mit dem Boden (5) ein einstückiges Dropstitch-Bauteil bildet, beidseitig mit der Rückwand (4) an Falzkanten die linke Seitenwand (2a) und die rechte Seitenwand (2b) verbunden sind und die Seitenwände (2a, 2b) Dropstitch-Bauteile sind, wobei durch Faltung einer inneren Dropstich-Wand beidseitig des Falzes angeordnete Teilflächen aufeinanderzuliegen kommen und in den Falzkanten Klebeflächen (9,10) der Oberfläche des Dropstitch-Materials aufeinander geklebt oder aufeinandergeschweißt sind.

2. Aufblasbare Transportbox nach Anspruch 1, **dadurch gekennzeichnet, dass** die Klebeflächen (9,10) rechteckförmig sind und im Winkel neben den Klebeflächen (9,10) ein Spalt (11) verbleibt, durch den die Luft überströmt.

3. Aufblasbare Transportbox nach einem der Ansprüche 1 oder 2, **dadurch gekennzeichnet, dass** jede Seitenwand (2a, 2b) ein Fenster (6a, 6d) umfasst.

4. Aufblasbare Transportbox nach Anspruch 3, **dadurch gekennzeichnet, dass** in den Fenstern (6a, 6d) jeweils Querstäbe (14) angeordnet sind.

5. Aufblasbare Transportbox nach einem der vorstehenden Ansprüche, **dadurch gekennzeichnet, dass** die Seitenwände (2a, 2b) mit dem Boden (5) jeweils längs einer Falzkante verbunden sind und sich die Seitenwände (2a, 2b) nach dem Ablassen der Luft längs diagonaler Knicklinien (15a, 15b) zusammenfalten lassen.

6. Aufblasbare Transportbox nach einem der vorstehenden Ansprüche, **dadurch gekennzeichnet, dass** an der Oberkante der Rückwand (4) eine aufrollbare Front-/Oberseite angebracht ist, die mit seitlichen Reißverschlüssen mit den Seitenwänden (2a, 2b) verbunden ist, mit denen sie geöffnet bzw. geschlossen werden kann.

7. Hundebox umfassend eine aufblasbare Transportbox nach einem der Ansprüche 1 bis 6, wobei ein oder mehrere Hunde in der Transportbox unterbringbar sind.

8. Fahrradanhänger zum Transport von Kindern umfassend eine aufblasbare Transportbox nach einem der Ansprüche 1 bis 6, wobei die Transportbox zur Aufnahme der Kinder dient.

9. Palette umfassend eine aufblasbare Transportbox nach einem der Ansprüche 1 bis 6, wobei die Transportbox zur Aufnahme des Transportguts dient.

## Claims

1. Inflatable transport box having a bottom (5), a rear wall (4), a right side wall (2a) and a left side wall (2b), the bottom (5), rear wall (4) and the side walls (2a, 2b) consisting of a dropstitch material, wherein the rear wall (4) is connected to the bottom (5) at one fold edge and forms an integral dropstitch component with the bottom (5), the left side wall (2a) and the right side wall (2b) are connected to the rear wall (4) at fold edges on both sides and the side walls (2a, 2b) are dropstitch components, wherein, by folding an inner dropstitch wall, partial areas arranged on both sides of the fold come to rest on one another, and wherein bond areas (9, 10) of the surface of the dropstitch material are glued or welded to one another in the fold edges.

2. Inflatable transport box according to claim 1, **characterized in that** the bond areas (9, 10) are of a rectangular shape and that a gap (11) remains in an angle next to the bond areas (9, 10) through which air overflows.

3. Inflatable transport box according to any of claims 1 or 2, **characterized in that** each side wall (2a, 2b) includes a window (6a, 6d).

4. Inflatable transport box according to claim 3, **characterized in that** crossbars (14) are arranged in each of the windows (6a, 6d).

5. Inflatable transport box according to any of the preceding claims, **characterized in that** the side walls (2a, 2b) each are connected to the bottom (5) along a fold edge and that the side walls (2a, 2b) can be folded up along diagonal fold lines (15a, 15b) after the air has been released.

6. Inflatable transport box according to any of the preceding claims, **characterized in that** that a roll-up front/top is attached to the upper edge of the rear wall (4), which is connected to the side walls (2a, 2b) by lateral zippers with which it can be opened or closed.

7. Dog box comprising an inflatable transport box according to anyone of claims 1 to 6, wherein one or a plurality of dogs may be accommodated in the transport box.

8. Bicycle trailer for transporting children comprising an inflatable transport box according to anyone of claims 1 to 6, wherein the transport box is for accommodating children.

9. Pallet comprising an inflatable transport box according to anyone of claims 1 to 6, wherein the transport box is for accommodating transport goods.

## Revendications

1. Caisse de transport gonflable, qui présente un fond (5), une paroi arrière (4), une paroi latérale droite (2a) et une paroi latérale gauche (2b), le fond (5), la paroi arrière (4) et les parois latérales (2a, 2b) étant composés d'un matériau à mailles coulées,
dans laquelle la paroi arrière (4) est reliée au fond (5) au niveau d'un pliage et forme avec le fond (5) un élément à mailles coulées d'un seul tenant, des deux côtés la paroi latérale gauche (2a) et la paroi latérale droite (2b) sont reliées à la paroi arrière (4) au niveau des pliages et les parois latérales (2a, 2b) sont des éléments à mailles coulées, dans laquelle par pliage d'une paroi interne à mailles coulées des deux côtés des plis, des surfaces partielles sont disposées de manière à venir se superposer les unes sur les autres et dans les pliages, des surfaces adhésives (9, 10) de la surface du matériau à mailles coulées sont collées les unes sur les autres ou soudées les unes aux autres.

2. Caisse de transport gonflable selon la revendication 1, **caractérisée en ce que** les surfaces adhésives (9, 10) sont de forme rectangulaire et dans l'angle située à proximité des surfaces adhésives (9, 10) il subsiste un espace (11), à travers lequel s'écoule de l'air.

3. Caisse de transport gonflable selon l'une quelconque des revendications 1 ou 2, **caractérisée en ce que** chaque paroi latérale (2a, 2b) comprend une fenêtre (6a, 6d).

4. Caisse de transport gonflable selon la revendication 3, **caractérisée en ce que** des barres transversales (14) sont disposées, respectivement, dans les fenêtres (6a, 6d).

5. Caisse de transport gonflable selon l'une quelconque des revendications précédentes, **caractérisée en ce que** les parois latérales (2a, 2b) sont reliées au fond (5) respectivement le long d'un pliage et les parois latérales (2a, 2b) se laissent plier après l'évacuation de l'air le long de lignes de pliages diagonales (15a, 15b).

6. Caisse de transport gonflable selon l'une quelconque des revendications précédentes, **caractérisée en ce qu'**une face frontale/supérieure enroulable est montée au niveau du bord supérieur de la paroi arrière (4), qui est reliée à des fermetures à glissières latérales aux parois latérales (2a, 2b), avec lesquelles elle peut être ouverte ou fermée.

7. Caisse pour chiens comprenant une caisse de transport gonflable selon l'une quelconque des revendications 1 à 6, dans laquelle un ou plusieurs chiens peuvent être placés dans la caisse de transport.

8. Remorque de vélo pour transporter des enfants comprenant une caisse de transport gonflable selon l'une quelconque des revendications 1 à 6, dans laquelle la caisse de transport sert à accueillir des enfants.

9. Palette comprenant une caisse de transport gonflable selon l'une quelconque des revendications 1 à 6, dans laquelle la caisse de transport sert à accueillir des marchandises.
